# FASCICULE DE BREVET EUROPEEN

(11) **EP 0 477 640 B1**
(45) Date de publication et mention de la délivrance du brevet: **26.10.1994**
(21) Numéro de dépôt: 91115189.2
(22) Date de dépôt: 09.09.1991
(51) Int. Cl.: G01M 3/20

(54) **Dispositif de contrôle d'étanchéité d'une pièce**
Vorrichtung zur Prüfung der Dichtigkeit eines Stückes
Device for controlling the tightness of a piece

(30) Priorité: 12.09.1990 FR 9011272
(43) Date de publication de la demande: 01.04.1992
(73) Titulaire: ALCATEL CIT, 75008 Paris (FR)
(72) Inventeur: Tallon, Jacques, F-74000 Annecy (FR)
(74) Mandataire: Weinmiller, Jürgen

(56) Documents cités:
- EP-A- 0 359 449
- GB-A- 2 055 210
- US-A- 2 255 921
- US-A- 4 282 743

## Description

La présente invention concerne un dispositif de contrôle d'étanchéité.

Le contrôle d'étanchéité de certaines pièces telles que des compresseurs frigorifiques, des évaporateurs, des pôles de disjoncteurs au SF6, etc.... consiste souvent à placer la pièce à contrôler dans une chambre à vide reliée à un détecteur de fuite à hélium, puis à gonfler la pièce à contrôler en hélium ou en mélange air-hélium.

En cas de défaut d'étanchéité, l'hélium s'échappe par la fissure éventuelle et l'importance de l'écoulement est mesurée par le détecteur.

Dans ce procédé de contrôle d'étanchéité, le gonflage de la pièce en gaz traceur est effectué par une conduite qui traverse la chambre à vide et qui comporte à son extrémité un coupleur de raccordement pour sa liaison avec la pièce à contrôler.

Un coupleur classique connu se compose d'une partie femelle qui se monte à l'extrémité d'une conduite liée à la pièce à contrôler, et d'une partie mâle qui se monte sur la canalisation d'arrivée de gaz de test, les deux parties s'emboîtant bien entendu l'une dans l'autre. Les emboîtements de chaque partie sur sa conduite respective ainsi que des deux parties entre elles sont des liaisons qui comportent des joints. Ces joints doivent assurer une étanchéité parfaite, être imperméables au gaz de test (hélium) et supporter des milliers d'épreuves de compression et décompression, d'accouplements et de désaccouplements. Ces exigences sont difficiles à satisfaire et il est ainsi nécessaire de changer fréquemment les joints en démontant les coupleurs.

L'invention a pour but d'éviter d'avoir à changer fréquemment les joints en acceptant de ne pas avoir une parfaite étanchéité des coupleurs.

L'invention a ainsi pour objet un dispositif de contrôle d'étanchéité d'une pièce, comprenant une chambre à vide dans laquelle est placée la pièce à contrôler, un détecteur de fuite à hélium étant relié à ladite chambre à vide, la pièce à contrôler étant gonflée en hélium ou en mélange air-hélium par une conduite externe pénétrant dans ladite chambre à vide et comportant un coupleur pour son raccordement avec ladite pièce, caractérisé en ce que ledit coupleur est entouré d'une chambre collectrice reliée, par une conduite, à une pompe à vide située à l'extérieur de ladite chambre à vide.

On va maintenant donner la description d'un exemple de mise en oeuvre de l'invention en se reportant au dessin annexé dans lequel :
La figure 1 montre un dispositif de contrôle d'étanchéité selon l'invention.
La figure 2 montre un coupleur rapide utilisé dans le dispositif de la figure 1.
Les figures 3 et 4 montrent en coupe et en perspective un exemple possible de chambre collectrice.
Les figures 5 et 6 montrent un exemple dans lequel la partie inférieure de la chambre collectrice est fixée à la chambre à vide.

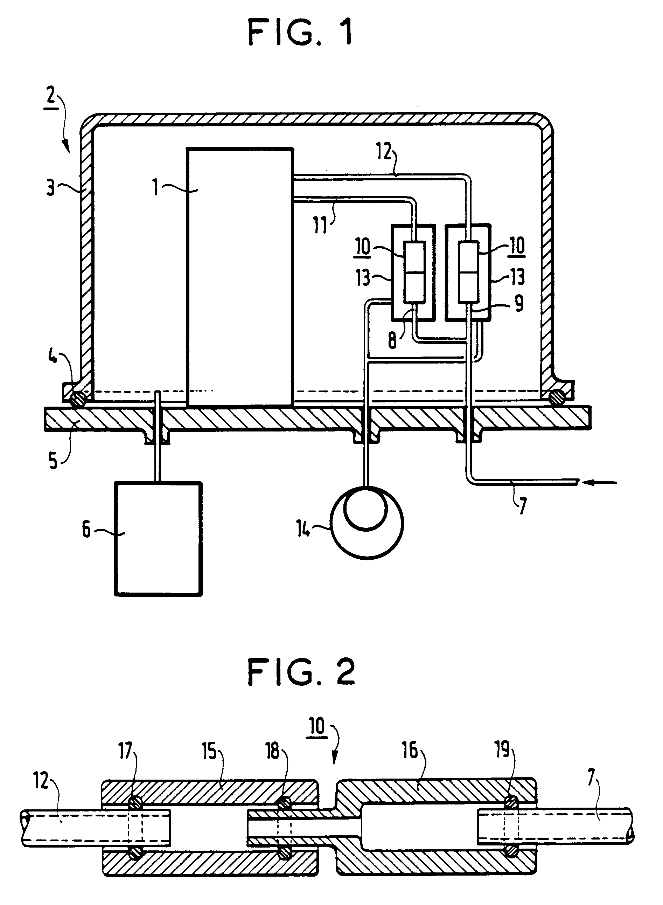

En se reportant à la figure 1, on voit un dispositif pour le contrôle de l'étanchéité d'une pièce 1.

La pièce 1 est placée dans une chambre à vide 2 composée d'une cloche 3 qui repose, par l'intermédiaire d'un joint d'étanchéité 4, sur une platine support 5. La chambre à vide 2 est reliée à un détecteur de fuite à hélium 6 tandis que la pièce à contrôler 1 est gonflée à l'hélium ou par un mélange d'air-hélium par une conduite externe 7 qui pénètre dans la chambre à vide 2 par la platine 5. La conduite 7 se divise en deux branches 8 et 9 sur chacune desquelles est monté un coupleur mécanique rapide de style classique 10. Ces coupleurs 10 sont reliés par des conduites 11, 12 à la pièce à contrôler 1.

Selon l'invention, chaque coupleur rapide 10 est complètement entouré par une chambre collectrice 13. Les chambres collectrices 13 sont reliées à une pompe 14.

Ainsi, en cas de fuite des coupleurs 10, le flux d'hélium confiné dans les chambres collectrices 13 est pompé par la pompe 14 et n'atteint pas le détecteur de fuite 6.

La vitesse de pompage de la pompe à vide 14 doit être supérieure à la valeur de la conductance de fuite de chaque chambre collectrice, mille fois supérieure par exemple, de manière à ce que le flux d'hélium éventuel soit essentiellement aspiré par cette pompe 14.

Dans l'exemple représenté, deux coupleurs 13 sont utilisés pour alimenter la pièce 1 par deux entrées 11 et 12 distinctes. Bien entendu il pourrait n'y avoir qu'un seul coupleur ou même plus de deux.

La figure 2 représente un coupleur rapide mécanique 10. Il se compose d'une partie femelle 15 et d'une partie mâle 16.

La partie femelle 15 est reliée à la pièce 1 par la conduite 12 et la partie mâle 16 est reliée à la conduite souple 7 d'alimentation en hélium. Des joints 17, 18 et 19 assurent l'étanchéité entre les différentes pièces.

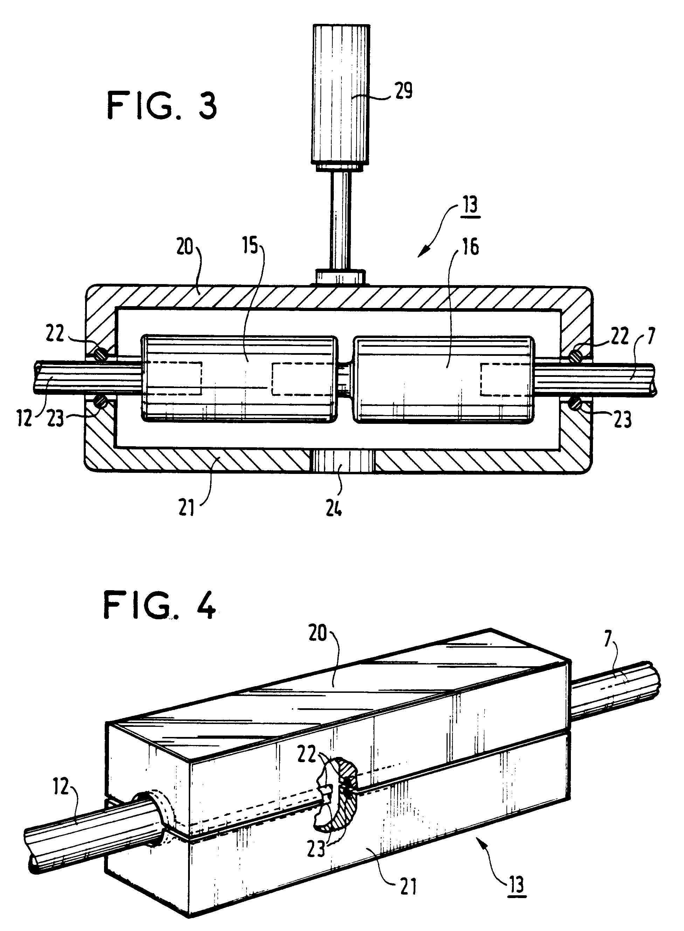

Les figures 3 et 4 montrent une chambre collectrice 13. Elle se compose de deux demi-parties 20 et 21 portant chacune un joint 22 et 23. L'ensemble constitue une chambre grossièrement étanche. En 24, on a représenté le passage pour la liaison avec la pompe 14.

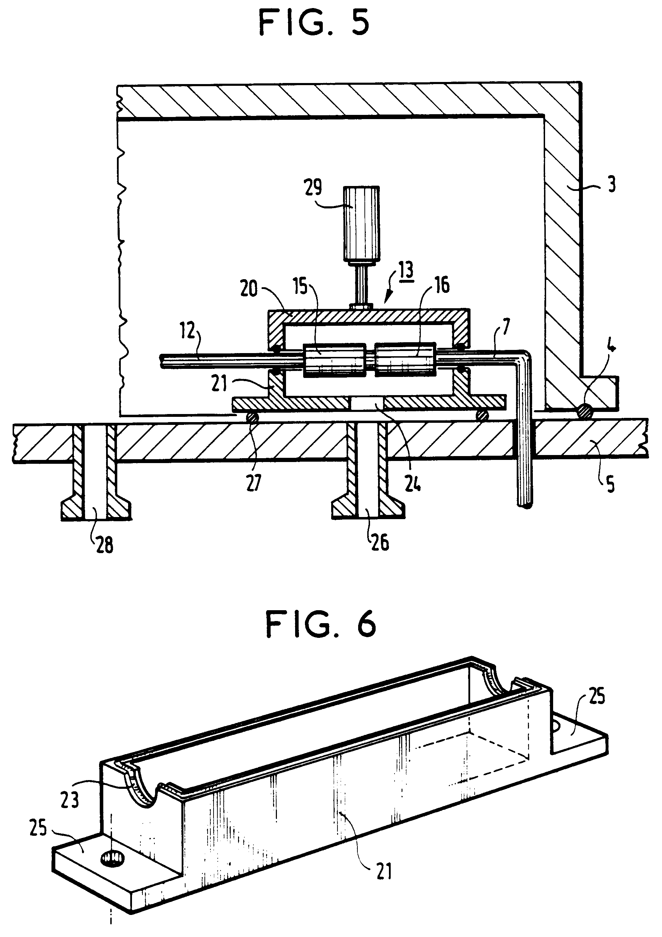

La figure 5 montre un exemple où la chambre collectrice 13 est placée de manière fixe dans la chambre à vide 3. A cet effet, la partie inférieure 21 de la chambre collectrice 13 porte des oreilles 25 de fixation.

La chambre collectrice 13 est placée au droit de la bride de liaison 26 à la pompe à vide 14, et un joint 27 assure l'étanchéité. Sur la figure 5, on voit aussi la bride de liaison 28 au détecteur de fuite 6.

La figure 6 montre en perspective la partie inférieure 21 de la chambre collectrice 13 correspondant à l'exemple de la figure 5. Les deux parties 20 et 21 de la chambre collectrice, aussi bien dans le cas de la figure 3 que de la figure 5, sont maintenues en contact, soit par une fermeture mécanique (grenouillère), soit par un système de vérin 29.

## Revendications

1. Dispositif de contrôle d'étanchéité d'une pièce (1), comprenant une chambre à vide (2) dans laquelle est placée la pièce (1) à contrôler, un détecteur de fuite à hélium (6) étant relié à ladite chambre à vide, la pièce à contrôler étant gonflée en hélium ou en mélange air-hélium par une conduite externe (7) pénétrant dans ladite chambre à vide et comportant un coupleur (10) pour son raccordement avec ladite pièce, caractérisé en ce que ledit coupleur (10) est entouré d'une chambre collectrice (13) reliée par une conduite à une pompe à vide (14) située à l'extérieur de ladite chambre à vide.

## Claims

1. Device for seal testing a part (1), comprising a vacuum chamber (2) in which the part (1) under test is placed and a helium leakage detector (6) connected to said vacuum chamber, said part under test being filled with helium or with air-helium mixture through an exterior pipe (7) entering said vacuum chamber and incorporating a coupling (10) for connecting it to said part, characterized in that said coupling (10) is surrounded by a collector chamber (13) connected by a pipe to a vacuum pump (14) outside said vacuum chamber.

## Patentansprüche

1. Vorrichtung zur Kontrolle der Dichtheit eines Teils (1), die eine Vakuumkammer (2), in die das zu prüfende Teil (1) eingebracht wird, sowie einen Heliumleckdetektor (6) aufweist, der mit der Vakuumkammer verbunden ist, wobei das zu prüfende Teil mit Helium oder einer Luft-Helium-Mischung über eine äußere Leitung (7) beschickt wird, die in die Vakuumkammer eindringt und eine Kupplung (10) für ihren Anschluß an das Teil aufweist, dadurch gekennzeichnet, daß die Kupplung (10) von einer Kollektorkammer (13) umgeben ist, die über eine Leitung mit einer Vakuumpumpe (14) verbunden ist, die sich außerhalb der Vakuumkammer befindet.
